# EUROPEAN PATENT SPECIFICATION

(11) **EP 1 193 783 B1**
(45) Date of publication and mention of the grant of the patent: **02.11.2011**
(21) Application number: 01122751.9
(22) Date of filing: 21.09.2001
(51) Int. Cl.: H01M 4/00, C01B 25/00

(54) **Method for the preparation of cathode active material and method for the preparation of a non-aqueous electrolyte cell**
Verfahren zur Herstellung von Kathodenaktivmaterial und Verfahren zur Herstellung einer Zelle mit nichtwässerigem Elektrolyten
Méthode pour la fabrication de matière active cathodique et méthode de fabrication d'une celle à électrolyte non-aqueux

(30) Priority: 29.09.2000 JP 2000301400
(43) Date of publication of application: 03.04.2002
(60) Divisional application: 10010344.9
(73) Proprietor: Sony Corporation, Tokyo (JP)
(72) Inventor: Hosoya, Mamoru c/o Sony Corporation, Minato-ku, Tokyo (JP); Takahashi, Kimio c/o Sony Corporation, Minato-ku, Tokyo, (JP); Fukushima, Yuzuru c/o Sony Corporation, Minato-ku, Tokyo, (JP)
(74) Representative: Müller - Hoffmann & Partner

(56) References cited:
- EP-A- 1 184 920
- WO-A-01/53198
- WO-A-97/40541
- PATENT ABSTRACTS OF JAPAN vol. 1997, no. 09, 30 September 1997 (1997-09-30) & JP 09 134725 A (NIPPON TELEGR &TELEPH CORP <NTT>), 20 May 1997 (1997-05-20)

## Description

### BACKGROUND OF THE INVENTION

### Field of the Invention

This invention relates to a method for the preparation of a cathode active material, capable of reversibly doping/undoping lithium, and to a method for the preparation of a non-aqueous electrolyte cell employing ths cathode active material.

### Description of Related Art

Nowadays, in keeping up with the recent marked progress in the electronic equipment, researches into re-chargeable secondary cells, as power sources usable conveniently and economically for prolonged time, are underway. Representative of the secondary cells are lead accumulators, alkali accumulators and non-aqueous electrolyte secondary cells.

Of the above secondary cells, lithium ion secondary cells, as non-aqueous electrolyte secondary cells, have such merits as high output and high energy density. The lithium ion secondary cells are made up of a cathode and an anode, including active materials capable of reversibly doping/undoping lithium ions, and a non-aqueous electrolyte.

As the anode active material, metal lithium, lithium alloys, such as Li-Al alloys, electrically conductive high molecular materials, such as polyacetylene or polypyrrole, doped with lithium, inter-layer compounds, having lithium ions captured into crystal lattices, or carbon materials, are routinely used. As the electrolytic solutions, the solutions obtained on dissolving lithium salts in non-protonic organic solvents, are used.

As the cathode active materials, metal oxides or sulfides, or polymers, such as TiS₂, MoS₂, NbSe₂ or V₂O₅, are used. The discharging reaction of the non-aqueous electrolyte secondary cells, employing these materials, proceeds as lithium ions are eluated into the electrolytic solution in the anode, whilst lithium ions are intercalated into the space between the layers of the cathode active material. In charging, a reaction which is the reverse of the above-described reaction proceeds, such that lithium is intercalated in the cathode. That is, the process of charging/discharging occurs repeatedly by the repetition of the reaction in which lithium ions from the anode make an entrance into and exit from the cathode active material.

As the cathode active materials for the lithium ion secondary cells, LiCoO₂, LiNiO₂ and LiMn₂O₄, for example, having a high energy density and a high voltage, are currently used. However, these cathode active materials containing metallic elements having low Clarke number in the composition thereof, are expensive, while suffering from supply difficulties. Moreover, these cathode active materials are relatively high in toxicity and detrimental to environment. For this reason, novel cathode active materials, usable in place of these materials, are searched.

On the other hand, it is proposed to use LiFePO₄, having an olivinic structure, as a cathode active material for the lithium ion secondary cells. LiFePO₄ has a high volumetric density of 3.6 g/cm³ and is able to develop a high potential of 3.4 V, with the theoretical capacity being as high as 170 mAh/g. In addition, LiFePO₄ in an initial state has an electro-chemically undopable Li at a rate of one Li atom per each Fe atom, and hence is a promising material as a cathode active material for the lithium ion secondary cell. Moreover, since LiFePO₄ includes iron, as an inexpensive material rich in supply as natural resources, it is lower in cost than LiCoO₂, LiNiO₂ or LiMn₂O₄, mentioned above, while being more amenable to environment because of lower toxicity.

However, the electronic conductivity of LiFePO₄ is low, so that, if LiFePO₄ is to be used as a cathode active material, it is necessary to add a large quantity of an electrically conductive material in the cathode active material. Since the particle size of the electrically conductive material is larger than the particle size of LiFePO₄, the proportion of LiFePO₄ in the cathode active material is decreased, as a result of which the cell capacity becomes smaller.

Furthermore, WO 01/53198 A1 describes lithium-mixed metal materials which, upon electrochemical interaction, release lithium ions, and are capable of reversibly cycling lithium ions. It is provided a method of making a lithium mixed metal compound by reaction of starting materials which comprises : mixing starting materials in particle form, said starting materials comprising a metal compound, a lithium compound having a melting point greater than 450°C, and carbon, where said carbon is present in an amount sufficient to reduce the oxidation state of at least one metal ion of said starting materials without full reduction to an elemental state; and heating said starting materials in a non-oxidizing atmosphere at a temperature sufficient to form a reaction product comprising lithium and said reduced metal ion.

According to the disclosure of EP 1 184 920 A2 it is described a cathode active material improved in electron conductivity and a non-aqueous electrolyte cell employing this cathode active material and which is improved in cell capacity and cyclic characteristics. The cathode active material is composed of a compound having the general formula LixFeP04 where 0 < x ≤ 1.0, and a carbon material, with the carbon content per unit weight being not less than 3 wt% and with the powder density being not lower than 2.2 g/cm3.

### SUMMARY OF THE INVENTION

It is therefore an object of the present invention to provide a cathode active material having superior electronic conductivity.

It is another object of the present invention to provide a non-aqueous electrolyte cell having a high capacity and superior cyclic characteristics through use of the cathode active material.

In one aspect, the present invention provides a cathode active material, as a composite material of a compound having the formula LiₓFePO₄, where 0 < x ≤ 1.0, and a carbon material, wherein the specific surface area as found by the Brunauer Emmet Teller formula is not less than 10.3 m²/g.

With the cathode active material, the specific surface area as found by the Brunauer Emmet Teller formula is not less than 10.3 m²/g, the specific surface area per unit weight is sufficiently large to increase the contact area between the cathode active material and the electrically conductive material. The result is the improved electronic conductivity of the cathode active material.

In another aspect, the present invention provides a non-aqueous electrolyte cell including a cathode having a cathode active material, an anode having an anode active material and a non-aqueous electrolyte, wherein the cathode active material is a composite material of a compound having the formula LiₓFePO₄, where 0 < x ≤ 1.0, and a carbon material, and wherein the specific surface area of the cathode active material as found by the Brunauer Emmet Teller formula is not less than 10.3 m²/g.

With the non-aqueous electrolyte cell, in which the cathode active material is a composite material of a compound having the formula LiₓFePO₄, where 0 < x ≤ 1.0, and a carbon material, and in which the specific surface area of the cathode active material as found by the Brunauer Emmet Teller formula is not less than 10.3 m²/g, the specific surface area per unit weight of the cathode active material is sufficiently large to increase the contact area between the cathode active material and the electrically conductive material. The result is the improved electronic conductivity of the cathode active material and high capacity and superior cyclic characteristics of the non-aqueous electrolyte cell.

In still another aspect, the present invention provides a cathode active material, as a composite material of a compound having the formula LiₓFePO₄ where 0 < x ≤ 1.0, and a carbon material, and wherein the particle size of first-order particles is not larger than 3.1 µm.

With the cathode active material, in which the particle size of the first-order particles is prescribed to be not larger than 3.1 µm, the specific surface area per unit weight of the cathode active material is sufficiently large to increase the contact area between the cathode active material and the electrically conductive material. The result is the improved electronic conductivity of the cathode active material.

In yet another aspect, the present invention provides a cathode active material including a cathode having a cathode active material, an anode having an anode active material and a non-aqueous electrolyte, wherein the cathode active material is a composite material of a compound having the formula LiₓFePO₄ where 0 < x ≤ 1.0, and a carbon material, and wherein the particle size of first-order particles is not larger than 3.1 µm.

In the non-aqueous electrolyte cell, in which the cathode active material used is a composite material of a compound having the formula LiₓFePO₄ where 0 < x ≤ where 0 < x ≤ 1.0, and a carbon material, and in which the particle size of first-order particles is not larger than 3.1 µm, the specific surface area per unit weight of the cathode active material is sufficiently large to increase the contact area between the cathode active material and the electrically conductive material. The result is the improved electronic conductivity ofthe cathode active material and high capacity and superior cyclic characteristics of the non-aqueous electrolyte cell.

### BRIEF DESCRIPTION OF THE DRAWINGS

Fig. 1 is a longitudinal conventional view showing an illustrative structure of a non-aqueous electrolyte cell according to the present invention.
Fig.2 is a graph showing Raman spectral peaks of a carbon material.

### DESCRIPTION OF THE PREFERRED EMBODIMENTS

Referring to the drawings, preferred embodiments of the present invention will be explained in detail.

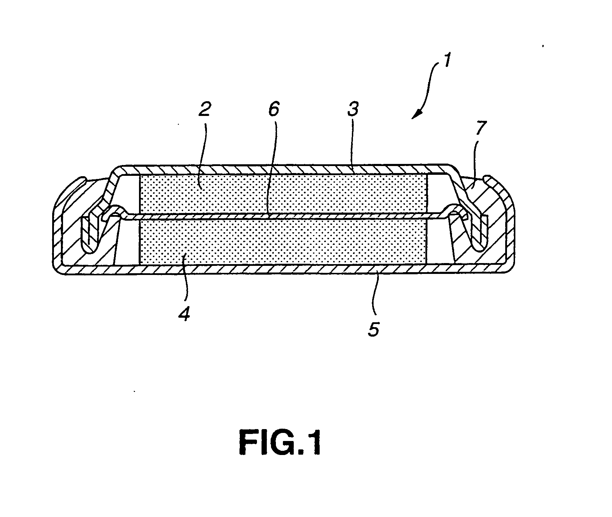

Referring to Fig.1, a non-aqueous electrolyte cell 1, prepared in accordance with the present invention, includes an anode 2, an anode can 3, holding the anode 2, a cathode 4, a cathode can 5 holding the cathode 4, a separator 6 interposed between the cathode 4 and the anode 2, and an insulating gasket 7. In the anode can 3 and in the cathode can 5 is charged a non-aqueous electrolytic solution.

The anode 2 is formed by e.g., a foil of metal lithium as an anode active material. If a material capable of doping/undoping lithium is used as the anode active material, the anode 2 is a layer of an anode active material formed on an anode current collector, which may, for example, be a nickel foil.

As the anode active material, capable of doping/undoping lithium, metal lithium, lithium alloys, lithium-doped electrically conductive high molecular materials or layered compounds, such as carbon materials or metal oxides.

The binder contained in the anode active material may be any suitable known resin material, routinely used as the binder of the layer of the anode active material for this sort of the non-aqueous electrolyte cell.

The anode can 3 holds the anode 2, while operating as an external anode of the non-aqueous electrolyte cell 1.

The cathode 4 is a layer of the cathode active material formed on a cathode current collector, such as an aluminum foil. The cathode active material, contained in the cathode 4, is able to reversibly emit or occlude lithium electro-chemically.

As the cathode active material, a composite material of carbon and a compound of an olivinic structure having the formula LiₓFePO₄, where 0 < x ≤ 1.0, that is the LiFePO₄ carbon composite material, the detailed manufacturing method for which will be explained subsequently, is used.

In the following explanation, it is assumed that LiFePO₄ is used as LiₓFePO₄. and a composite material composed of this compound and carbon is used as the cathode active material.

The LiFePO₄ carbon composite material is such a material composed of LiFePO₄ particles on the surfaces of which are attached numerous particles of the carbon material having the particle size appreciably smaller than the particle size of the LiFePO₄ particles. Since the carbon material is electrically conductive, the LiFePO₄ carbon composite material, composed of the carbon material and LiFePO₄. is higher in electronic conductivity than e.g., LiFePO₄. That is, since the LiFePO₄ carbon composite material is improved in electronic conductivity due to the carbon particles attached to the LiFePO₄ particles, the capacity proper to LiFePO₄ can be sufficiently manifested. Thus, by using the LiFePO₄ carbon composite material as the cathode active material, the non-aqueous electrolyte secondary cell 1 having a high capacity can be achieved.

The carbon content per unit weight in the LiFePO₄ carbon composite material is desirably not less than 3 wt%. If the carbon content per unit weight of the LiFePO₄ carbon composite material is less than 3 wt%, the amount of carbon particles attached to LiFePO₄ may be insufficient so that sufficient favorable effect in improving the electronic conductivity may not be realized.

As the carbon material forming the LiFePO₄ carbon composite material, such a material is preferably used which has an intensity area ratio of diffracted beams appearing at the number of waves of 1570 to 1590 cm⁻¹ to the diffracted beams appearing at the number of waves of 1340 to 1360 cm⁻¹ in the Raman spectrum of graphite in the Raman spectroscopy, or the ratio A(D/G), equal to 0.3 or higher.

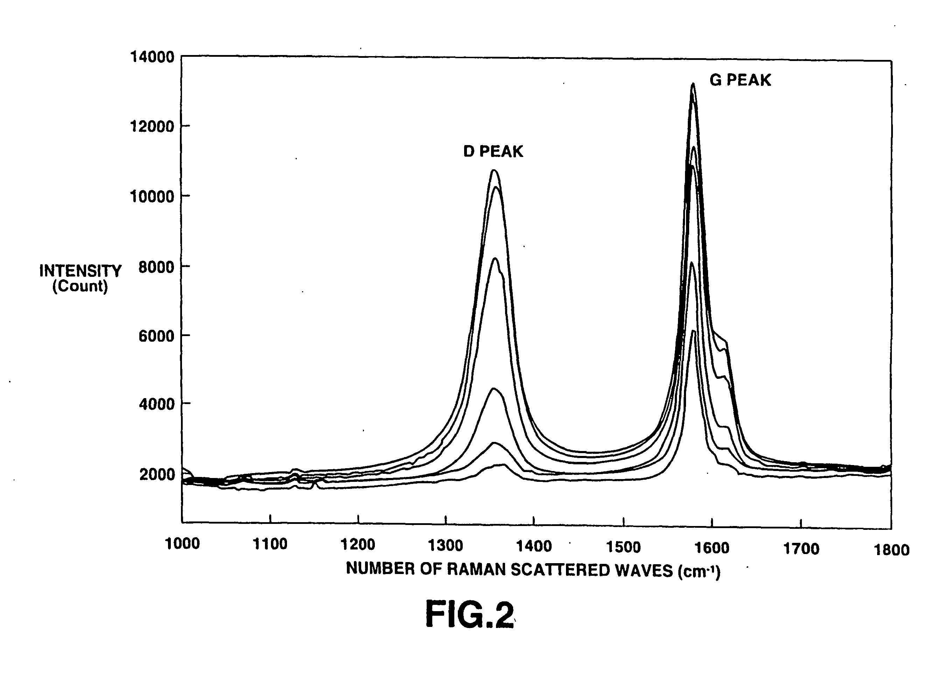

The intensity area ratio A(D/G) is defined as being a background-free Raman spectral intensity area ratio A(D/G) of a G-peak appearing at the number of waves of 1570 to 1590 cm⁻¹ and a D-peak appearing at the number of waves of 1340 to 1360 cm⁻¹ as measured by the Raman spectroscopic method as shown in Fig.2. The expression "background-free" denotes the state free from noisy portions.

Among the numerous peaks of the Raman spectrum of Gr, two peaks, namely a peak termed a G-peak appearing at the number of waves of 1570 to 1590 cm⁻¹ and a peak termed a D-peak appearing at the number of waves of 1340 to 1360 cm⁻¹, as discussed above, may be observed. Of these, the D-peak is not a peak inherent in the G-peak, but is a Raman inactive peak appearing when the structure is distorted and lowered in symmetry. So, the D-peak is a measure of a distorted structure of Gr. It is known that the intensity area ratio A (D/G) of the D- and G-peaks is proportionate to a reciprocal of the crystallite size La along the axis a of Gr.

As such carbon material, an amorphous carbon material, such as acetylene black, is preferably employed.

The carbon material having the intensity area ratio A (D/G) not less than 0.3 may be obtained by processing such as comminuting with a pulverizing device. A carbon material having an arbitrary ratio A (D/G) may be realized by controlling the pulverizing time duration.

For example, graphite, as a crystalline carbon material, may readily be destroyed in its structure by a powerful pulverizing device, such as a planetary ball mill, and thereby progressively amorphized, so that the intensity area ratio A (D/G) is concomitantly increased. That is, by controlling the driving time duration of a pulverizing device, such a carbon material having a desired A (D/G) value not less than 0.3 may readily be produced. Thus, subject to pulverization, a crystalline carbon material may also be preferably employed as a carbon material.

The powder density of the LiFePO₄ carbon composite material is preferably not less than 2.2 g/cm³. If the material for synthesis of the LifiePO₄ carbon composite material is milled to such an extent that the powder density is not less than 2.2 g/cm³, the resulting LiFePO₄ carbon composite material is comminuted sufficiently to realize a non-aqueous electrolyte secondary cell 1 having a higher charging ratio of the cathode active material and a high capacity. Moreover, since the LiFePO₄ carbon composite material is comminuted to satisfy the aforementioned powder density, its specific surface may be said to be increased. That is, a sufficient contact area may be maintained between LiFePO₄ and the carbon material to improve the electronic conductivity.

If the powder density of the LiFePO₄ carbon composite material is less than 2.2 g/cm³, the LiFePO₄ carbon composite material is not compressed sufficiently, so that there is a risk that the packing ratio of the active material cannot be improved at the cathode 4.

On the other hand, it is prescribed that the Brunauer Emmet Teller (BET) specific surface area in the LiFePO₄ carbon composite material is not less than 10.3 m²/g. If the BET specific surface area of the LiFePO₄ carbon composite material is prescribed to be not less than 10.3 m²/g, the surface area of LiFePO₄ per unit weight can be sufficiently increased to increase the contact area between LiFePO₄ and the carbon material to improve the electronic conductivity of the cathode active material.

It is prescribed that the primary particle size of the LiFePO₄ carbon composite material is not larger than 3.1 µm. By prescribing the primary particle size of the LiFePO₄ carbon composite material to be not larger than 3.1 µm, the surface area of LiFePO₄ per unit area may be sufficiently increased to increase the contact area between LiFePO₄ and the carbon material to improve the electronic conductivity of the cathode active material.

The binder contained in the layer of the cathode active material may be formed of any suitable known resin material routinely used as the binder for the layer of the cathode active material for this sort of the non-aqueous electrolyte cell.

The cathode can 5 holds the cathode 4 while operating as an external cathode of the non-aqueous electrolyte cell 1.

The separator 6, used for separating the cathode 4 and the anode 2 from each other, may be formed of any suitable known resin material routinely used as a separator for this sort of the non-aqueous electrolyte cell. For example, a film of a high molecular material, such as polypropylene, is used. From the relation between the lithium ion conductivity and the energy density, the separator thickness which is as thin as possible is desirable. Specifically, the separator thickness desirably is 50 µm or less.

The insulating gasket 7 is built in and unified to the anode can 3. The role of this insulating gasket 7 is to prevent leakage of the non-aqueous electrolyte solution charged into the anode can 3 and into the cathode can 5.

As the non-aqueous electrolyte solution, such a solution obtained on dissolving an electrolyte in a non-protonic aqueous solvent is used.

As the non-aqueous solvent, propylene carbonate, ethylene carbonate, butylene carbonate, vinylene carbonate, γ-butyrolactone, sulforane, 1, 2-dimethoxyethane, 1, 2-diethoxyethane, 2-methyl tetrahydrofuran, 3-methyl-1,3-dioxolane, methyl propionate, methyl lactate, dimethyl carbonate, diethyl carbonate and dipropyl carbonate, for example, may be used. In view of voltage stability, cyclic carbonates, such as propylene carbonate, ethylene carbonate, butylene carbonate or vinylene carbonate, and chained carbonates, such as dimethyl carbonate, diethyl carbonate and dipropyl carbonate, are preferably used. These non-aqueous solvents may be used alone or in combination.

As the electrolytes dissolved in the non-aqueous solvent, lithium salts, such as LiPF₆, LiClO₄, LiAsF₆, LiBF₄, LiCF₃SO₃ or LiN(CF₃SO₂)₂, may be used. Of these lithium salts, LiPF₆ and LiBF₄ are preferred.

Although the non-aqueous electrolyte cell, explained above, is the non-aqueous electrolyte secondary cell 1 employing a non-aqueous electrolyte solution, the present invention is not limited thereto, but may be applied to such a cell employing a sold electrolyte as the non-aqueous electrolyte. The solid electrolyte used may be an inorganic solid electrolyte or a high molecular solid electrolyte, such as gel electrolyte, provided that the material used exhibits lithium ion conductivity. The inorganic solid electrolyte may be enumerated by lithium nitride and lithium iodide. The high molecular solid electrolyte is comprised of an electrolyte salt and a high molecular compound dissolving it. The high molecular compound may be an etheric high molecular material, such as poly(ethylene oxide), cross-linked or not, a poly(methacrylate) ester based compound, or an acrylate-based high molecular material, either alone or in combination in the state of being copolymerized or mixed in the molecules. In this case, the matrix of the gel electrolyte may be a variety of high molecular materials capable of absorbing and gelating the non-aqueous electrolyte solution. As these high molecular materials, fluorine-based high molecular materials, such as, for example, poly(vinylidene fluoride) or poly(vinylidene fluoride-CO-hexafluoropropylene), etheric high molecular materials, such as polyethylene oxide, cross-linked or not, or poly(acrylonitrile), may be used. Of these, the fluorine-based high molecular materials are particularly desirable in view of redox stability.

The method for the preparation of the non-aqueous electrolyte cell 1, constructed as described above, is hereinafter explained.

First, a composite material of LiₓFePO₄ and the carbon material, as a cathode active material, is synthesized by a manufacturing method as now explained.

For synthesizing the cathode active material, LiₓFePO₄ as a starting material for synthesis is kneaded together, milled and sintered. At an optional time point in the course of the mixing, milling and sintering, a carbon material is added to the kneaded starting materials for synthesis. As the LiₓFePO₄ starting materials for synthesis, Li₃PO_{4.} Li₃(PO₄)₂ or a hydrate Fe₃(PO₄)₂ ·nH₂O thereof where n denotes the number of hydrates, are used.

In the following, such a case is explained in which lithium phosphate Li₃PO₄and a hydrate Fe₃(PO₄)₂ ·8H₂O thereof, synthesized as explained below, are used as starting materials for synthesis, and in which, after adding a carbon material to these starting materials for synthesis, a number of process steps are executed to synthesize the LiFePO₄ carbon composite material.

First, the LiFePO₄ starting materials for synthesis and the carbon material are mixed together to form a mixture by way of a mixing step. The mixture from the mixing step is then milled by a milling process, and the milled mixture then is fired by way of a sintering process.

In the mixing process, lithium phosphate and iron phosphate I octahydrate are mixed together at a pre-set ratio and further added to with a carbon material to form a mixture.

This iron phosphate I octahydrate, used as a starting material for synthesis, is synthesized by adding disodium hydrogen phosphate duodecahydrate (2Na₂HPO₄·12H₂O) to an aqueous solution obtained on dissolving iron phosphate heptahydrate (FeSO₄·7H₂O) in water and by allowing the resulting mass to dwell for a pre-set time. The reaction of synthesis of iron phosphate I octahydrate may be represented by the following chemical formula (1):

3FeSO₄·7H₂O + 2Na₂HPO₄ · 12H₂O → Fe₃(PO₄)₂·8H₂O + 2Na₂SO₄ + 37H₂O (1).

In iron phosphate I octahydrate, as the material for synthesis, there is contained a certain amount of Fe³⁺ from the synthesis process. If Fe³⁺ is left in the material for synthesis, a trivalent Fe compound is generated by sintering to obstruct single-phase synthesis of the LiFePO₄ carbon composite material. It is therefore necessary to add a reducing agent to the starting materials for synthesis prior to sintering and to reduce Fe³⁺ contained in the starting materials for synthesis at the time of firing to Fe²⁺.

However, there is a limitation to the capability of the reducing agent in reducing Fe³⁺ to Fe²⁺ by the reducing agent, such that, if the content of Fe³⁺ in the starting materials for synthesis is excessive, it may be an occurrence that Fe³⁺ is not reduced in its entirety but is left in the LiFePO₄ carbon composite material.

It is therefore desirable that the content of Fe³⁺ in the total iron in the iron phosphate I octahydrate be set to 61 wt% or less. By limiting the content of Fe³⁺ in the total iron in the iron phosphate I octahydrate to 61 wt% or less from the outset, single-phase synthesis of the LiFePO₄ carbon composite material can be satisfactorily achieved without allowing Fe³⁺ to be left at the time of firing, that is without generating impurities ascribable to Fe³⁺.

It should be noted that, the longer the dwell time in generating iron phosphate I octahydrate, the larger becomes the content of Fe³⁺ in the generated product, so that, by controlling the dwell time so as to be equal to a preset time, iron phosphate I octahydrate having an optional Fe³⁺ can be produced. The content of Fe³⁺ in the total iron in the iron phosphate I octahydrate can be measured by the Mesbauer method.

The carbon material added to the starting materials for synthesis acts as a reducing agent for reducing Fe³⁺ to Fe²⁺, at the time of sintering, even if Fe²⁺ contained in iron phosphate I octahydrate as the starting materials for synthesis is oxidized to Fe³⁺ by oxygen in atmosphere or due to sintering. Therefore, even if Fe³⁺ is left in the starting materials for synthesis, impurities may be prevented from being generated to assure single-phase synthesis of the LiFePO₄ carbon composite material. Moreover, the carbon material acts as an antioxidant for preventing oxidation of Fe²⁺ contained in the starting materials for synthesis to Fe³⁺. That is, the carbon material prevents oxidation to Fe³⁺ of Fe²⁺ by oxygen present in atmosphere and in a firing oven prior to or during sintering.

That is, the carbon material acts not only as an electrification agent for improving the electronic conductivity of the cathode active material but also as a reducing agent and as an antioxidant. Meanwhile, since this carbon material is a component of the LiFePO₄ carbon composite material, there is no necessity of removing the carbon material following synthesis of the LiFePO₄ carbon composite material. The result is the improved efficiency in the preparation of the LiFePO₄ carbon composite material.

It is noted that the carbon content per unit weight of the LiFePO₄. carbon composite material be not less than 3 wt%. By setting the carbon content per unit weight of the LiFePO₄ carbon composite material to not less than 3 wt%, it is possible to utilize the capacity and cyclic characteristics inherent in LiFePO₄ to its fullest extent.

In the milling process, the mixture resulting from the mixing process is subjected to milling in which pulverization and mixing occur simultaneously. By the milling herein is meant the powerful comminuting and mixing by a ball mill. As the ball mill, a planetary ball mill, a shaker ball mill or a mechano-fusion may selectively be employed.

By milling the mixture from the mixing process, the starting materials for synthesis and the carbon material can be mixed homogeneously. Moreover, if the starting materials for synthesis is comminuted by milling, the specific surface area of the starting materials for synthesis can be increased, thereby increasing the contact points of the starting materials for synthesis to accelerate the synthesis reaction in the subsequent sintering process.

It is desirable that, by milling the mixture containing the starting materials for synthesis, the particle size distribution of the particle size not less than 3 µm be not larger than 22% in terms of the volumetric integration frequency. With the particle size distribution of the starting materials for synthesis in the above range, the starting materials for synthesis has a surface area sufficient to produce surface activity for carrying out the synthesis reaction. Thus, even if the sintering temperature is of a low value of e.g., 600°C which is lower than the melting point of the starting materials for synthesis, the reaction efficiency is optimum, thus realizing the single-phase synthesis of the LiFePO₄ carbon composite material satisfactorily.

Moreover, the milling is desirably executed so that the powder density of the LiFePO₄ carbon composite material will be 2.2 g/cm³ or higher. By comminuting the starting materials for synthesis to give the above defined powder density, the specific surface area of LiFePO₄ and hence the contact area between LiFePO₄ and the carbon material can be increased to improve the electronic conductivity of the cathode active material.

In the firing process, the milled mixture from the milling process is sintered. By sintering the mixture, lithium phosphate can be reacted with iron phosphate I octahydrate to synthesize LiFePO₄.

The synthesis reaction of LiFePO₄ may be represented by the following reaction formula (2):

Li₃PO₄ + Fe₃(PO₄)₂ ·nH₂O → 3 LiFePO₄ + nH₂O (2)

where n denotes the number of hydrates and is equal to 0 for an anhydride. In the chemical formula (2), Li₃PO₄ is reacted with Fe₃(PO₄)₂ or its hydrate Fe₃(PO₄)₂ ·nH₂O where n denotes the number of hydrates.

As may be seen from the chemical formula (2), no by-product is yielded if Fe₃(PO₄)₂ is used as a starting materials for synthesis. On the other hand, if Fe₃(PO₄)₂ ·nH_{2O} is used, water, which is non-toxic, is by-produced.

Heretofore, lithium carbonate, ammonium dihydrogen phosphate and iron acetate II, as syntheses materials, are mixed at a pre-set ratio and sintered to synthesize LiFePO₄ by the reaction shown by the chemical formula (3):

Li₂CO₃ + 2Fe(CH₃COO)₂ + 2NH₄H₂PO₄ → 2 LiFePO₄ + CO₂ + H₂O + 2NH₃ + 4CH₃COOH (3).

As may be seen from the reaction formula (3), toxic by-products, such as ammonia or acetic acid, are generated on sintering with the conventional synthesis method for LiFePO_{4.} So, a large-scale equipment, such as gas collector, is required for processing these toxic by-products, thus raising the cost. In addition, the yield of LiFePO₄ is lowered because these by-products are generated in large quantities.

According to the present invention, in which Li₃PO₄, Fe₃(PO₄)₂ or its hydrate Fe₃(PO₄)₂ ·nH₂O, where n denotes the number of hydrates, is used as the starting material for synthesis, targeted LiFePO₄ can be produced without generating toxic by-products. In other words, safety in sintering may be appreciably improved as compared to the conventional manufacturing method. Moreover, while a large-scale processing equipment is heretofore required for processing toxic by-products, the manufacturing method of the present invention yields only water, which is innoxious, as a by-product, thus appreciably simplifying the processing step to allow to reduce size of the processing equipment. The result is that the production cost can be appreciably lower than if ammonia etc which is by-produced in the conventional system has to be processed. Moreover, since the by-product is yielded only in minor quantities, the yield of LiFePO₄ may be improved significantly.

Although the sintering temperature in sintering the mixture may be 400 to 900°C by the above synthesis method, it is preferably 600°C or thereabouts in consideration of the cell performance. If the sintering temperature is less than 400°C, neither the chemical reaction not crystallization proceeds sufficiently such that there is the risk that the phase of impurities such as Li₃PO₄ of the starting materials for synthesis may persist and hence the homogeneous LiFePO₄ cannot be produced. If conversely the sintering temperature exceeds 900°C, crystallization proceeds excessively so that the LiFePO₄ particles are coarse in size to decrease the contact area between LiFePO₄ and the carbon material to render it impossible to achieve sufficient discharging capacity.

During sintering, Fe in the LiFePO₄ carbon composite material synthesized is in the bivalent state. So, in the temperature of the order of 600°C as the synthesis temperature, Fe in the LiFePO₄ carbon composite material is promptly oxidized to Fe³⁺ by oxygen in the sintering atmosphere in accordance with the chemical formula shown by the chemical formula (4):

6LiFePO₄ + 3/20₂ →+2Li₃Fe₂(PO₄)₃ + Fe₂O₃ (4)

so that impurities such as trivalent Fe compounds are produced to obstruct the single-phase synthesis of the LiFePO₄ carbon composite material.

So, inert gases, such as nitrogen or argon, or reducing gases, such as hydrogen or carbon monoxide, are used as the sintering atmosphere, while the oxygen concentration in the sintering atmosphere is desirably a range within which Fe in the LiFePO₄ carbon composite material is not oxidized, that is to not larger than 1012 ppm in volume. By setting the oxygen concentration in the sintering atmosphere to 1012 ppm in volume or less, it is possible to prevent Fe from being oxidized even at the synthesis temperature of 600°C or thereabouts to achieve the single-phase synthesis of the LiFePO₄ carbon composite material.

If the oxygen concentration in the sintering atmosphere is 1012 ppm in volume or higher, the amount of oxygen in the sintering atmosphere is excessive, such that Fe in the LiFePO₄ carbon composite material is oxidized to Fe³⁺ to generate impurities to obstruct the single-phase synthesis of the LiFePO₄ carbon composite material.

As for takeout of the sintered LiFePO₄ carbon composite material, the takeout temperature of the sintered LiFePO₄ carbon composite material, that is th temperature of the LiFePO₄ carbon composite material when exposed to atmosphere, is desirably 305°C or lower. On the other hand, the takeout temperature of the sintered LiFePO₄ carbon composite material is more desirably 204°C or lower. By setting the takeout temperature of the LiFePO₄ carbon composite material to 305°C or lower, Fe in the sintered LiFePO₄ carbon composite material is oxidized by oxygen in atmosphere to prevent impurities from being produced.

If the sintered LiFePO₄ carbon composite material is taken out in an insufficiently cooled state, Fe in the LiFePO₄ carbon composite material is oxidized by oxygen in atmosphere, such that impurities tend to be produced. However, if the LiFePO₄ carbon composite material is cooled to too low a temperature, the operating efficiency tends to be lowered.

Thus, by setting the takeout temperature of the sintered LiFePO₄ carbon composite material to 305°C or lower, it is possible to prevent Fe in the sintered LiFePO₄ carbon composite material from being oxidized by oxygen in atmosphere and hence to prevent impurities from being generated to maintain the operation efficiency as well as to synthesize the LiFePO₄ carbon composite material having desirable characteristics as the cell with high efficiency.

Meanwhile, the cooling of the as-sintered LiFePO₄ carbon composite material is effected in a sintering furnace. The cooling method used may be spontaneous cooling or by forced cooling. However, if a shorter cooling time, that is a higher operating efficiency, is envisaged, forced cooling is desirable. In case the forced cooling is used, it is sufficient if a gas mixture of oxygen and inert gases, or only the inert gases, are supplied into the sintering furnace so that the oxygen concentration in the sintering furnace will be not higher than the aforementioned oxygen concentration, that is 1012 ppm in volume or less.

Although the carbon material is added prior to milling, it may be added after milling or after sintering.

However, if the carbon material is added after sintering, the reducing effect in sintering or the effect in prohibiting oxidation cannot be realized but the carbon material is used only for improving the electrical conductivity. Therefore, in case the carbon material is added after the sintering, it is necessary to prevent Fe³⁺ from being left by other means.

In the carbon material is added after sintering, the product synthesized by sintering is not the LiFePO₄ carbon composite material but is LiFePP₄. So, after adding the carbon material, synthesized by sintering, milling is again carried out. By again carrying out the milling, the carbon material added is comminuted and more liable to be attached to the surface of LiFePO₄. By the second milling, LiFePO₄ and the carbon material is mixed together sufficiently so that the comminuted carbon material can be homogeneously attached to the surface of LiFePO₄. Thus, even when the carbon material is added after the sintering, it is possible to obtain a product similar to one obtained in case the addition of the carbon material is effected prior to milling, that is the LiFePO₄ carbon composite material. On the other hand, the meritorious effect similar to that described above can be realized.

The non-aqueous electrolyte secondary cell 1, employing the LiFePO₄ carbon composite material, obtained as described above, as the cathode active material, may, for example, be prepared as follows:

As the anode 2, the anode active material and the binder are dispersed in a solvent to prepare a slurried anode mixture. The so-produced anode mixture is evenly coated on a current collector and dried in situ to form a layer of the anode active material to produce the anode 2. As the binder of the anode mixture, any suitable known binder may be used. In addition, any desired known additive may be added to the anode mixture. It is also possible to use metal lithium, which becomes the anode active material, directly as the anode 2.

As the cathode 4, the LiFePO₄ carbon composite material, as the cathode active material, and the binder, are dispersed in a solvent to prepare a slurried cathode mixture. The so-produced cathode mixture is evenly coated on the current collector and dried in situ to form a layer of the cathode active material to complete the cathode 4. As the binder of the cathode active material, any suitable known binder may be used, whilst any desirable known additive may be added to the cathode mixture.

The non-aqueous electrolyte may be prepared by dissolving an electrolyte salt in a non-aqueous solvent.

The anode 2 is held in the anode can 3, the cathode is held in the cathode can 5 and the separator 6 formed by a porous polypropylene film is arranged between the anode 2 and the cathode 4. The non-aqueous electrolytic solution is injected into the anode can 3 and into the cathode can 5. The anode can 3 and the cathode can 5 are caulked together and secured with the interposition of the insulating gasket 7 in-between to complete a coin-shaped non-aqueous electrolyte cell 1.

The non-aqueous electrolyte cell 1, prepared as described above, having the LiFePO₄ carbon composite material as the cathode active material, has a high charging ratio of the cathode active material and is superior in electronic conductivity. Thus, with this non-aqueous electrolyte cell 1, lithium ion doping/undoping occurs satisfactorily so that the cell may be of a larger capacity. In addition, since the superior cyclic characteristics inherent in LiFePO₄ may be manifested sufficiently, the cell may be of a larger capacity and superior in cyclic characteristics.

There is no particular limitation to the shape of the non-aqueous electrolyte cell 1 of the above-mentioned embodiment, such that the cell may be cylindrically-shaped, square-shaped, coin-shaped or button-shaped, while it may be of a thin type or of a larger format.

### Examples

The present invention is hereinafter explained on the basis of specified experimental results. For investigating into the effect of the present invention, an LiFePO₄ carbon composite material was synthesized and, using the so produced LiFePO₄ carbon composite material as the cathode active material, a non-aqueous electrolyte cell was produced to evaluate its characteristics.

### Experiment 1

First, for evaluating the difference in cell characteristics caused by the difference in specific surface area of the LiFePO₄ carbon composite material, as found by the Brunauer Emmet Teller formula, cathode active materials were prepared as the milling time was changed and, using these cathode active materials, test cell samples were fabricated.

### Example 1

### Preparation of cathode active material

First, Li₃PO₄ and Fe₃(PO₄)₂·8H_{2O} were mixed together to give a lithium to iron element ratio of 1:1 and acetylene black powders as amorphous carbon material were added to the resulting mixture in an amount of 10 wt% of the total sintered product. The resulting mixture and the alumina balls, each 10 mm in diameter, were charged into an alumina pot 100 mm in diameter, with the weight ratio of the mixture to the alumina balls equal to 1:2. The mixture was milled using a planetary ball mill. As this planetary ball mill, a planetary rotating pot mill for test, manufactured by ITO SEISAKUSHO KK under the trade name of LA-PO₄, was used, and the mixture was milled under the conditions shown below.

Specifically, the milling with the planetary ball mill was carried out as the sample mixture and the alumina balls each 10 mm in diameter were charged into an alumina pot 100 mm in diameter, with the mass ratio of the sample mixture to the alumina balls of 1:2, under the following conditions:

### Conditions for planetary ball milling

radius of rotation about sun gear: 200 mm
number of revolutions about the sun gear: 250 rpm
number of revolutions about a planetary gear itself: 250 rpm
driving time duration: 10 hours

The milled mixture was charged into a ceramic crucible and sintered for five hours at a temperature of 600°C in an electrical furnace maintained in a nitrogen atmosphere to produce an LiFePO₄ carbon composite material.

The LiFePO₄ carbon composite material, obtained as described above, was charged into an alumina vessel and subjected to second milling, for pulverization, using a planetary ball mill, to produce an LiFePO₄ carbon composite material as a cathode active material.

The planetary ball mill which is the same as that described above was used. The second milling on the planetary ball mill was carried out in the same way as described above except that the number of revolutions about the sun gear and the number of revolutions about a planetary gear itself was set to 100 rpm and the driving time duration of the planetary ball mill for the second milling was set to 30 minutes.

### Preparation of liquid-based test cell

A cell was prepared using the so prepared LiFePO₄ carbon composite material, as a cathode active material.

95 parts by weight of the LiFePO₄ carbon composite material, as the cathode active material, prepared in Example 1, and 5 parts by weight of poly (vinylidene fluoride), in the form of fluorine resin powders, as a binder, were mixed together and molded under pressure to form a pellet-shaped cathode having a diameter of 15.5 mm and a thickness of 0.1 mm.

A foil of metal lithium was then punched to substantially the same shape as the cathode to form an anode.

Then, a non-aqueous electrolyte solution was prepared by dissolving LiPF₆ in a solvent mixture comprised of equal volumes of propylene carbonate and dimethyl carbonate, at a concentration of 1 mol/l, to prepare a non-aqueous electrolyte solution.

The cathode, thus prepared, was charged into the cathode can, while the anode was held in the anode can and the separator was arranged between the cathode and the anode. The non-aqueous electrolytic solution was injected into the anode can and into the cathode can. The anode can and the cathode can 5 were caulked and secured together to complete a type 2016 coin-shaped non-aqueous electrolyte cell with a diameter of 20.0 mm and a thickness of 1.6 mm.

### Example 2

A cathode active material was prepared in the same way as in Example 1, except setting the second milling time, that is the driving time of the planetary ball mill, to 60 minutes, to prepare a coin-shaped test cell.

### Example 3

A cathode active material was prepared in the same way as in Example 1, except setting the second milling time, that is the driving time of the planetary ball mill, to 120 minutes, to prepare a coin-shaped test cell.

### Example 4

A cathode active material was prepared in the same way as in Example 1, except setting the second milling time, that is the driving time of the planetary ball mill, to 150 minutes, to prepare a coin-shaped test cell.

### Example 5

A cathode active material was prepared in the same way as in Example 1, except setting the second milling time, that is the driving time of the planetary ball mill, to 180 minutes, to prepare a coin-shaped test cell.

### Comparative Example 1

A cathode active material was prepared in the same way as in Example 1, except setting the second milling time, that is the driving time of the planetary ball mill, to 0 minute, to prepare a coin-shaped test cell.

### Comparative Example 2

A cathode active material was prepared in the same way as in Example 1, except setting the second milling time, that is the driving time of the planetary ball mill, to 1 minute, to prepare a coin-shaped test cell.

### Comparative Example 3

A cathode active material was prepared in the same way as in Example 1, except setting the second milling time, that is the driving time of the planetary ball mill, to 2 minutes, to prepare a coin-shaped test cell.

### Comparative Example 4

A cathode active material was prepared in the same way as in Example 1, except setting the second milling time, that is the driving time of the planetary ball mill, to 6 minutes, to prepare a coin-shaped test cell.

### Comparative Example 5

A cathode active material was prepared in the same way as in Example 1, except setting the second milling time, that is the driving time of the planetary ball mill, to 10 minutes, to prepare a coin-shaped test cell.

Of the LiFePO₄ carbon composite materials of Examples 1 to 5 and the Comparative Examples 1 to 5, pulverized with the second milling as described above, measurements were made of the X-ray diffraction and specific surface area. The X-ray diffraction was measured using an X-ray diffractometer RINT2000, manufactured by RIGAKU SHA CO. LTD., while the specific surface area was measured with nitrogen purging using a BET method specific surface area measurement apparatus, manufactured by SHIMAZU SEISAKUSHO under the trade name of furosope2300. The results of measurement of the specific surface area are shown in Table 1.

| | BET specific surface area (m²/g) | second milling time (min) | initial discharge capacity (mAh/g) | capacity after 50 cycles (mAh/g) | upkeep ratio (%) | cell evaluation |
|---|---|---|---|---|---|---|
| Comp. Ex. 1 | 1.6 | 0 | 38 | 32 | 84.2 | × |
| Comp. Ex. 1 | 2.4 | 1 | 50 | 35 | 70.0 | × |
| Comp. Ex. 1 | 4.1 | 2 | 56 | 39 | 69.6 | × |
| Comp. Ex. 1 | 6.8 | 6 | 88 | 42 | 47.7 | × |
| Comp. Ex. 1 | 9.1 | 10 | 91 | 63 | 69.2 | × |
| Ex.1 | 10.3 | 30 | 108 | 93 | 86.1 | ○ |
| Ex.2 | 26.4 | 60 | 121 | 113 | 93.4 | ○ |
| Ex.3 | 32.1 | 120 | 154 | 144 | 93.5 | ○ |
| Ex.4 | 49.5 | 150 | 160 | 153 | 95.6 | ○ |
| Ex.5 | 60.1 | 180 | 161 | 155 | 96.3 | ○ |

As a result of X-ray diffractometry, there was noticed no marked crystal destruction in the crystals of the LiₓFePO₄ carbon composite material caused by milling.

It may also be seen from Table I that the specific surface area of the LiFePO₄ carbon composite material is increased as a result of milling, such that, the longer the second milling time, that is the longer the driving time of the planetary ball mill in the second milling, the larger becomes the specific surface area of the LiFePO₄ carbon composite material that is produced.

The coin-shaped test cells of the Examples 1 to 5 and the Comparative Examples 2 and 3, prepared as described above, were subjected to the charging/discharging cyclic characteristics tests, as now explained, to find the initial discharge capacity and the capacity upkeep ratio after 50 cycles.

### Test of charging/discharging cyclic characteristics

The charging/discharging cyclic characteristics were evaluated based on the volume upkeep ratio after repeated charging/discharging.

Each test cell was charged at a constant current and, at a time point the cell voltage reached 4.2 V, the constant current charging was switched to constant voltage charging and charging was carried out as the cell voltage was kept at 4.2 V. The charging was terminated at a time point the current value fell to 0.01 mA/cm² or less. Each test cell was then discharged. The discharging was terminated at a time point the cell voltage fell to 2.0 V.

With the above process as one cycle, 50 cycles were carried out, and the discharge capacity at the first cycle and that at the fiftieth cycle were found. The ratio of the discharge capacity at the fiftieth cycle (C2) to the discharge capacity at the first cycle (C1), or (C2/C1) × 100, was found as the capacity upkeep ratio. Meanwhile, both the charging and the discharging were carried out at ambient temperature (25°C), as the current density at this time was set to 0.1 mA/cm². The results are also shown in Table 1. By way of cell evaluation in Table 1, the cells having the initial discharge capacity not less than 100 mAh/g and the capacity upkeep ratio of not less than 50%are marked O, and the cells having the initial discharge capacity less than 100 mAh/g or the capacity upkeep ratio less than 50% are marked x. It should be noted that the initial discharge capacity not less than 100 mAh/g and the capacity upkeep ratio of the 50th cycle not less than 50% are desirable values as cell characteristics.

It is seen from Table 1 that the Examples 1 to 5, with the specific surface area of the LiFePO₄ carbon composite material of not less than 10.3 m²/g, exhibit optimum values of the initial discharge capacity exceeding 100 mAh/g which is desirable as characteristics of the cell of the practically useful level, and the capacity upkeep ratio of the 50th cycle exceeds 50% desirable as characteristics of the cell of the practically useful level. This may be ascribable to the fact that, since the specific surface area of the LiFePO₄ carbon composite material is of an optimum value to sufficiently increase the contact area between the LiFePO₄ carbon composite material and the electrically conductive material, that is a value not less than 10.3 m²/g, the LiFePO₄ carbon composite material, that is the cathode active material, exhibits optimum electronic conductivity.

On the other hand, the Comparative Examples 1 to 4, in which the specific surface area of the LiFePO₄ carbon composite material is less than 10.3 m²/g, the initial discharge capacity is of a low value lower than 50% which is desirable as characteristics of the cell of the practically useful level, whilst the capacity upkeep ratio of the 50th cycle is also of a low value lower than 50% desirable as characteristics of the cell of the practically useful level. In the Comparative Example 5, the capacity upkeep ratio of the 50th cycle exceeds 50% desirable as characteristics of the cell of the practically useful level. However, the initial discharge capacity of this Comparative Example 5 is lower than 100 mAh/g desirable as characteristics of the cell of the practically useful level. This is possibly due to the fact that the specific surface area of the LiFePO₄ carbon composite material is smaller than an optimum value of 10.3 m²/g sufficient to increase the contact area between the LiFePO₄ carbon composite material and the electrically conductive material, so that a sufficient value of the electronic conductivity of the LiFePO₄ carbon composite material, that is the cathode active material, is not achieved.

It may be said from the foregoing that, by setting the specific surface area of the LiFePO₄ carbon composite material to not less than 10.3 m²/g, it is possible to produce a cathode active material having superior electronic conductivity. It may be said that, by employing the LiFePO₄ carbon composite material as the cathode active material, it is possible to produce a non-aqueous electrolyte cell having superior electronic conductivity.

### Preparation of polymer cell

Next, a polymer cell was prepared to evaluate its characteristics.

### Example 6

A gel electrolyte was prepared as follows: First, polyvinylidene fluoride, in which was copolymerized 6.0 wt% of hexafluoropropylene, a non-aqueous electrolyte and dimethyl carbonate, were mixed, agitated and dissolved to a sol-like electrolytic solution. To this sol-like electrolytic solution was added 0.5 wt% of vinylene carbonate VC to form a gelated electrolytic solution. As the non-aqueous electrolyte solution, such a solution was used which was obtained on mixing ethylene carbonate EC and propylene carbonate PC at a volumetric ratio of 6:4 and on dissolving LiPF₆ at a rate of 0.85 mol/kg in the resulting mixture.

A cathode was then prepared as follows: First, 95 parts by weight of the LiFePO₄ carbon composite material, prepared in Example 1, and 5 parts by weight of poly (vinylidene fluoride), in the form of fluorine resin powders, as a binder, were mixed together, and added to with N-methyl pyrrolidone to give a slurry, which slurry was coated on an aluminum foil 20 µm in thickness, dried in situ under heating and pressed to form a cathode coating film. A gelated electrolytic solution then was applied to one surface of the cathode coating film and dried in situ to remove the solvent. The resulting product was punched to a circle 15 mm in diameter, depending on the cell diameter, to form a cathode electrode.

The anode then was prepared as follows: First, 10 wt% of fluorine resin powders, as a binder, were mixed to graphite powders, and added to with N-methyl pyrrolidone to form a slurry, which slurry was then coated on a copper foil, dried in situ under heating and pressed to form an anode coating foil. On one surface of the anode coating foil was applied a gelated electrolytic solution and dried in situ to remove the solvent. The resulting product was punched to a circle 16.5 mm in diameter, depending on the cell diameter, to form an anode electrode.

The cathode, thus prepared, was charged into the cathode can, while the anode was held in the anode can and the separator was arranged between the cathode and the anode. The anode can and the cathode can were caulked and secured together to complete a type 2016 coin-shaped lithium polymer cell having a diameter and a thickness of 20 mm and 1.6 mm, respectively.

### Example 7

A coin-shaped lithium polymer cell was prepared in the same way as in Example 6 except using the LiFePO₄ carbon composite material prepared in Example 5.

### Comparative Example 6

A coin-shaped lithium polymer cell was prepared in the same way as in Example 6 except using the LiFePO₄ carbon composite material prepared in Comparative Example 3.

The polymer cell samples of the Examples 6 and 7 and the Comparative Example 6, prepared as described above, were put to tests on the charging/discharging cyclic characteristics to find the capacity upkeep ratio following 30 cycles. The results are shown in Table 2.

**Table 2**

| | BET specific surface area (m²/g) | initial discharge capacity (mAh/g) | capacity upkeep ratio after 30 cycles (%) |
|---|---|---|---|
| Ex.6 | 60.1 | 158 | 95.8 |
| Ex.7 | 10.3 | 106 | 93.1 |
| Comp. Ex.6 | 4.1 | 50 | 87.1 |

As may be seen from Table 2, both the initial discharge capacity and the capacity upkeep ratio after 30 cycles (%) exhibit desirable values with the Examples 6 and 7 in which the BET specific surface area of the LiFePO₄ carbon composite material is not less than 10.3 m²/g. Conversely, with the Comparative Example 6 in which the BET specific surface area of the LiFePO₄ carbon composite material, used as the cathode active material, is less than 10.3 m²/g, both the initial discharge capacity and the capacity upkeep ratio after 30 cycles (%) are of lower values. It may be said from this that the cathode active material according to the present invention gives such result as improved discharge capacity and improved cyclic characteristics even in case the gelated electrolyte is used as the non-aqueous electrolyte in place of the non-aqueous electrolyte solution.

### Experiment 2

For evaluating the difference in cell characteristics caused by the difference in particle size of the first-order particles in the LiFePO₄ carbon composite material, samples of the cathode active material were prepared as the milling time durations were changed and, using these samples, test cells were prepared.

### Example 8

A cathode active material sample was prepared as in Example 1, except setting the second milling time, that is the operating time of the planetary ball mill, to 240 minutes, to produce a coin-shaped test cell.

### Example 9

A cathode active material sample was prepared as in Example 1, except setting the second milling time, that is the operating time of the planetary ball mill, to 200 minutes, to produce a coin-shaped test cell.

### Example 10

A cathode active material sample was prepared as in Example 1, except setting the second milling time, that is the operating time of the planetary ball mill, to 160 minutes, to produce a coin-shaped test cell.

### Example 11

A cathode active material sample was prepared as in Example 1, except setting the second milling time, that is the operating time of the planetary ball mill, to 130 minutes, to produce a coin-shaped test cell.

### Example 12

A cathode active material sample was prepared as in Example 1, except setting the second milling time, that is the operating time of the planetary ball mill, to 100 minutes, to produce a coin-shaped test cell.

### Example 13

A cathode active material sample was prepared as in Example 1, except setting the second milling time, that is the operating time of the planetary ball mill, to 80 minutes, to produce a coin-shaped test cell.

### Example 14

A cathode active material sample was prepared as in Example 1, except setting the second milling time, that is the operating time of the planetary ball mill, to 40 minutes, to produce a coin-shaped test cell.

### Example 15

A cathode active material sample was prepared as in Example 1, except setting the second milling time, that is the operating time of the planetary ball mill, to 20 minutes, to produce a coin-shaped test cell.

### Comparative Example 7

A cathode active material sample was prepared as in Example 1, except setting the second milling time, that is the operating time of the planetary ball mill, to 5 minutes, to produce a coin-shaped test cell.

### Comparative Example 8

A cathode active material sample was prepared as in Example 1, except setting the second milling time, that is the operating time of the planetary ball mill, to 3 minutes, to produce a coin-shaped test cell.

Of the LiFePO₄ carbon composite material, as the cathode active material of the Examples 8 to 15 and the Comparative Examples 7 and 8, pulverized by the second milling, measurement were made of the X-ray diffraction and the particle size of the first-order particles. For measuring the X-ray diffraction, an X-ray diffractometer RINT2000, manufactured by RIGAKU CO. LTD., was used. For measuring the particle size, agglutinated particles were dispersed by ultrasonic vibrations and subsequently the particle size was measured by a laser diffraction method. The frequency peak appearing on the smallest particle side or the frequency range closest to it were used as particle size of the first-order particles. The measured results of the particle size of the first-order particles are shown in Table 3.

**Table 3**

| | particle size of first-order particles (µm) | second milling time (min) | initial discharging time (mAh/g) | capacity after 50 cycles (m.Ah/g) | upkeep ratio (%) | cell evaluation |
|---|---|---|---|---|---|---|
| Ex.8 | 0.2 | 240 | 164 | 153 | 93.3 | ○ |
| Ex.9 | 0.5 | 200 | 161 | 153 | 95.0 | ○ |
| Ex.10 | 0.8 | 160 | 160 | 148 | 92.5 | ○ |
| Ex.11 | 0.9 | 130 | 156 | 139 | 89.1 | ○ |
| Ex.12 | 1.1 | 100 | 145 | 125 | 86.2 | ○ |
| Ex.13 | 1.6 | 80 | 132 | 112 | 84.8 | ○ |
| Ex.14 | 2.4 | 40 | 118 | 88 | 74.6 | ○ |
| Ex.15 | 3.1 | 20 | 107 | 62 | 57.9 | ○ |
| Comp. Ex.7 | 3.5 | 5 | 72 | 36 | 50.0 | × |
| Comp. Ex.8 | 4.1 | 3 | 59 | 31 | 52.5 | × |

As a result of X-ray diffractometry, there was noticed no marked crystal destruction in the crystals of the LiₓFePO₄ carbon composite material caused by milling.

It may also be seen from Table 1 that the specific surface area of the LiₓFePO₄ carbon composite material is increased as a result of milling, such that, the longer the second milling time, that is the longer the driving time of the planetary ball mill in the second milling, the larger becomes the specific surface area of the LiₓFePO₄ carbon composite material that is produced.

The coin-shaped test cells of the Examples 8 to 15 and the Comparative Examples 7 and 8, prepared as described above, were put to the test on charging/discharging cyclic characteristics, in the same way as above, to find the initial discharge capacity and the capacity upkeep ratio following 50 cycles. The results are also shown in Table 3. By way of cell evaluation in Table 1, the cells having the initial discharge capacity not less than 100 mAh/g and the capacity upkeep ratio of not less than 50%are marked O, and the cells having the initial discharge capacity less than 100 mAh/g or the capacity upkeep ratio of less than 50% are marked ×. It should be noted that the initial discharge capacity not less than 100 mAh/g and the capacity upkeep ratio of the 50th cycle not less than 50% are desirable values as cell characteristics.

It is seen from Table 3 that the Examples 8 to 15, with the particle size of the first-order particles of the LiFePO₄ carbon composite material less than 3.1. µm, exhibit optimum values of the initial discharge capacity exceeding 100 mAh/g which is desirable as characteristics of the cell ofthe practically useful level, and the capacity upkeep ratio of the 50th cycle exceeds 50% desirable as characteristics of the cell of the practically useful level. This may be ascribable to the fact that, since the particle size of the first-order particles of the LiFePO₄ carbon composite material is of an optimum value to sufficiently increase the contact area between the LiFePO₄ carbon composite material and the electrically conductive material, that is a value less than 3.1µm, the LiFePO₄ carbon composite material, that is the cathode active material, has a larger surface area per unit weight of the LiFePO₄ carbon composite material, that is the carbon active material, and hence exhibits optimum electronic conductivity.

On the other hand, the Comparative Examples 7 and 8, in which the particle size of the first-order particles of the LiFePO₄ carbon composite material is larger than 3.1 µm, the initial discharge capacity is of a low value significantly lower than 50% which is desirable as characteristics of the cell of the practically useful level, whilst the capacity upkeep ratio of the 50th cycle is also of a low value lower than 50% desirable as characteristics of the cell of the practically useful level. In the Comparative Example 5, the capacity upkeep ratio of the 50th cycle exceeds 50% desirable as characteristics of the cell of the practically useful level. However, the initial discharge capacity of this Comparative Example 5 is lower than 100 mAh/g desirable as characteristics of the cell of the practically useful level. This is possibly due to the fact that the specific surface area ofthe LiFePO₄ carbon composite material is smaller than an optimum value of 10.3 m²/g sufficient to increase the contact area between the LiFePO₄ carbon composite material and the electrically conductive material, so that electronic conductivity of the LiFePO₄ carbon composite material, that is the cathode active material, is only insufficient.

It may be said from the foregoing that, by setting the specific surface area of the LiFePO₄ carbon composite material to not less than 10.3 m²/g, it is possible to produce a cathode active material having superior electronic conductivity. It may be said that, by employing the LiFePO₄ carbon composite material as the cathode active material, it is possible to produce a non-aqueous electrolyte cell having superior electronic conductivity.

A polymer cell then was prepared to evaluate its characteristics.

### Example 16

A coin-shaped lithium polymer cell was prepared in the same way as in Example 6, except using the LiFePO₄ carbon composite material fabricated in Example 9.

### Example 17

A coin-shaped lithium polymer cell was prepared in the same way as in Example 6, except using the LiFePO₄ carbon composite material fabricated in Example 15.

The polymer cells of the Examples 16 and 17, prepared as described above, were put to the aforementioned test on charging/discharging cyclic characteristics to find the initial discharge capacity and capacity upkeep ratio after 30 cycles. The results are shown in Table 3_{.}

**Table 3**

| | particle size of first-order particles (µm) | initial discharge capacity (mAh/g) | capacity upkeep ratio after 30 cycles (%) |
|---|---|---|---|
| Ex.16 | 0.5 | 158 | 95.8 |
| Hex. 17 | 3.1 | 102 | 92.3 |

As may be seen from Table 3, both the initial discharge capacity and capacity upkeep ratio after 30 cycles are of satisfactory values. From this, it may be seen that the cathode active material prepared in accordance with the manufacturing method of the present invention gives meritorious effects, such as improved discharge capacity and improved cyclic characteristics, even in case the gelated electrolyte is used in place of the non-aqueous electrolyte as the non-aqueous electrolytic solution.

## Claims

1. A cathode active material comprising a composite material of a compound having the formula LiₓFePO₄, where 0 < x ≤ 1.0,
and a carbon material, **characterised by**
the specific surface area as found by the Brunauer Emmet Teller formula is not less than 10.3 m²/g or
the particle size of first-order particles is not larger than 3.1 µm

2. The cathode active material according to claim 1 wherein, with a strength area D appearing at the number of waves of 1340 to 1360 cm⁻¹ and a strength area G appearing at the number of waves of 1570 to 1590 cm⁻¹ in the Raman spectroscopic method applied to said carbon material, the strength area ratio A (D/G) satisfies the condition of A(D/G) ≥ 0.30.

3. A non-aqueous electrolyte cell comprising:
a cathode having a cathode active material, an anode having an anode active material and a non-aqueous electrolyte, wherein the cathode active material is a composite material of a compound having the formula LiₓFePO₄, where 0 < x ≤ 1 .0, and a carbon material, and wherein
the specific surface area of the cathode active material as found by the Brunauer Emmet Teller formula is not less than 10.3 m²/gor wherein the particle size of first-order particles is not larger than 3.1 µm

4. The non-aqueous electrolyte cell according to claim 3 wherein, with a strength area D appearing at the number of waves of 1340 to 1360 cm⁻¹ and a strength area G appearing at the number of waves of 1570 to 1590 cm⁻¹ in the Raman spectroscopic method applied to said carbon material, the strength area ratio A (D/G) satisfies the condition of A(D/G) ≥ 0.30.

5. The non-aqueous electrolyte cell according to claim 3 or 4 wherein said non-aqueous electrolyte is a liquid-based non-aqueous electrolyte.

6. The non-aqueous electrolyte cell according to claim 3, 4 or 5 wherein said non-aqueous electrolyte is a polymer-based non-aqueous electrolyte.

## Patentansprüche

1. Kathodenaktivmaterial, umfassend ein Komposit- bzw. Verbundmaterial aus einer Verbindung mit der Formel Li_{X}FePO₄, wobei 0 < x ≤ 1,0, und ein Kohlenstoffmaterial, **dadurch gekennzeichnet, dass** die spezifische Oberfläche, bestimmt mit der Brunauer-Emmet-Teller-Formel, nicht weniger als 10,3 m²/g beträgt, oder
die Partikelgröße der Partikel erster Ordnung nicht größer als 3,1 µm ist.

2. Kathodenaktivmaterial nach Anspruch 1, wobei im Raman-Spektroskopie-Verfahren beim Kohlenstoffmaterial mit einem Feldbereich D, der bei den Wellenzahlen 1340 bis 1360 cm⁻¹ auftritt, und einem Feldbereich G, der bei den Wellenzahlen 1570 bis 1590 cm⁻¹ auftritt, das Feldbereichsverhältnis A(D/G) die Bedingung erfüllt: A(D/G) ≥ 0,30.

3. Zelle mit nicht-wässerigem Elektrolyten, umfassend:
eine Kathode mit einem Kathodenaktivmaterial, eine Anode mit einem Anodenaktivmaterial und einem nicht-wässerigen Elektrolyten, wobei das Kathodenaktivmaterial ein Komposit- bzw. Verbundmaterial aus einer Verbindung mit der Formel LiₓFePO₄ darstellt, wobei 0 < x ≤ 1,0, und ein Kohlenstoffmaterial, und wobei die spezifische Oberfläche des Kathodenaktivmaterials, bestimmt mit der Brunauer-Emmet-Teller-Formel, nicht weniger als 10,3 m²/g beträgt, oder die Partikelgröße der Partikel erster Ordnung nicht größer als 3,1 µm ist.

4. Zelle mit nicht-wässerigem Elektrolyten nach Anspruch 3, wobei im Raman-Spektroskopie-Verfahren beim Kohlenstoffmaterial mit einem Feldbereich D, der bei den Wellenzahlen 1340 bis 1360 cm⁻¹ auftritt, und einem Feldbereich G, der bei den Wellenzahlen 1570 bis 1590 cm⁻¹ auftritt, das Feldbereichsverhältnis A(D/G) die Bedingung erfüllt: A(D/G) ≥ 0,30.

5. Zelle mit nicht-wässerigem Elektrolyten nach Anspruch 3 oder 4, wobei der nicht-wässerige Elektrolyt einen nicht-wässerigen Elektrolyten auf flüssiger Basis darstellt.

6. Zelle mit nicht-wässerigem Elektrolyten nach Anspruch 3, 4 oder 5, wobei der nicht-wässerige Elektrolyt einen nicht-wässerigen Elektrolyten auf Polymerbasis darstellt.

## Revendications

1. Matériau actif de cathode comprenant un matériau composite ayant la formule LiₓFePO₄, où 0 < x ≤ 1,0,
et un matériau carbone, **caractérisé en ce que**
la surface spécifique, déterminée selon la formule de Brunauer Emmet Teller, n'est pas de moins de 10,3 m²/g ou
la taille de particule des particules de premier ordre n'est pas de plus de 3,1 µm.

2. Matériau actif de cathode selon la revendication 1 dans lequel, avec une zone de force D apparaissant au nombre d'ondes de 1340 à 1360 cm⁻¹ et avec une zone de force G apparaissant au nombre d'ondes de 1570 à 1590 cm⁻¹ selon le procédé de spectroscopie de Raman appliqué au dit matériau carbone, le rapport de zone A (D/G) satisfait la condition de A (D/G) ≥ 0,30.

3. Cellule électrolytique non aqueuse, comprenant :
une cathode ayant un matériau actif de cathode, une anode ayant un matériau actif d'anode, et un électrolyte non aqueux, dans laquelle le matériau actif de cathode est un matériau composite d'un composé ayant la formule LiₓFePO₄ où 0 < x ≤ 1,0, et un matériau carbone, et dans laquelle la surface spécifique du matériau actif de cathode, déterminée selon la formule de Brunauer Emmet Teller, n'est pas de moins de 10,3 m²/g, ou dans laquelle la taille de particule des particules de premier ordre n'est pas de plus de 3,1 µm.

4. Cellule électrolytique non aqueuse selon la revendication 3 dans laquelle, avec une zone de force D apparaissant au nombre d'ondes de 1340 à 1360 cm⁻¹ et avec une zone de force G apparaissant au nombre d'ondes de 1570 à 1590 cm⁻¹ selon le procédé de spectroscopie de Raman appliqué au dit matériau carbone, le rapport de zone A (D/G) satisfait la condition de A (D/G) ≥ 0,30.

5. Cellule électrolytique non aqueuse selon la revendication 3 ou 4, dans laquelle ledit électrolyte non aqueux est un électrolyte non aqueux à base de liquide.

6. Cellule électrolytique non aqueuse selon la revendication 3, 4 ou 5, dans laquelle ledit électrolyte non aqueux est un électrolyte non aqueux à base de polymère.
